# EUROPEAN PATENT APPLICATION

(11) **EP 2 128 476 A1**
(43) Date of publication of application: **02.12.2009**
(21) Application number: 09004138.5
(22) Date of filing: 23.03.2009
(51) Int. Cl.: F16D 65/12

(54) **Floating type disc brake**

(30) Priority: 28.05.2008 JP 2008139358
(71) Applicant: Yamaha Hatsudoki Kabushiki Kaisha, Iwata-shi, Shizuoka-ken 438-8501 (JP)
(72) Inventor: Suzuki, Nobuyuki, Iwata-shi Shizuoka-ken 438-8501 (JP)
(74) Representative: Grünecker, Kinkeldey, Stockmair & Schwanhäusser Anwaltssozietät

(57) **Abstract**

A floating type disc brake for a wheel axle of a motorcycle, comprising: a disc plate (30) including an annular portion having a first friction surface and a second friction surface formed for braking at either side of the disc plate (30) and a plurality of engaging portions; a bracket (31) mountable on the wheel axle and including a plurality of engaged portions, the engaging portions of the disc plate being engaged in engagement areas with the corresponding engaged portions of the bracket; and clamping plates (32) configured to limit movement of the disc plate (30) relative to the bracket (31), wherein the clamping plates are disposed at only one side of the first and second friction surfaces in at least one of the plurality of engagement areas.

## Description

The present invention relates to a floating type disc brake, and more specifically, it relates to a floating type disc brake for mounting on the wheel axle of a motorcycle and to a motorcycle equipped with the floating type disc brake.

A floating type disc brake has been used as a brake device on a motorcycle for years. As shown in Japanese Examined Patent Application Publication No. 7-30801, a floating type disc brake includes a disc plate having friction surfaces adapted to be engaged by pads and a bracket disposed at the inner circumferential side of the disc plate and mounted to the wheel axle. The disc plate is supported in a floating state by the bracket with a plurality of floating pins in between.

As another type of floating type disc brake designed for reduction in weight, there has been proposed a device in which a disc plate and a bracket are coupled together with projecting portions and concave portions, as shown in Japanese Unexamined Patent Application Publication No. 2005-291336. Specifically, the disc plate has a plurality of inwardly-extending projecting portions formed at the inner circumferential portion thereof, and the bracket has a plurality of concave portions at the outer circumferential portion thereof so that the projecting portions are engaged with the corresponding concave portions. Furthermore, to limit an axial movement of the bracket relative to the disc plate, clamping plates are provided at either side of engagement portions where the projecting portions are engaged with the concave portions so as to cover the engagement portions. The clamping plates, extending in the circumferential direction so as to cover the engagement portions, are crimped at both circumferential ends thereof.

A floating type disc brake of the type disclosed in Japanese Examined Patent Application Publication No. 7-30801 requires the number of floating pins to be increased in order to withstand a greater brake torque capacity, resulting in an increase in the number of components as well as an increase in weight.

On the other hand, a floating type disc brake of the type disclosed in Japanese Unexamined Patent Application Publication No. 2005-291336 has a greater contact area (area of circumferential contact between the projecting portions of the disc plate and the concave portions of the bracket) in engagement portions than a disc brake of the type disclosed in Japanese Examined Patent Application Publication No. 7-30801, and also has a reduced number of components, thereby allowing reduction in weight as compared to a disc brake of the type disclosed in Japanese Examined Patent Application Publication No. 7-30801.

However, further reduction in weight is sought for disc brakes for use in commercially available motorcycles as well as, in particular, road race type motorcycles.

Accordingly, it is an objective of the present invention to provide further reduction in weight of the floating type disc brake.

According to the present invention, said objective is solved by a floating type disc brake for a wheel axle of a motorcycle, comprising: a disc plate including an annular portion having a first friction surface and a second friction surface formed for braking at either side of the disc plate and a plurality of engaging portions; a bracket mountable on the wheel axle and including a plurality of engaged portions, the engaging portions of the disc plate being engaged in engagement areas with the corresponding engaged portions of the bracket; and clamping plates configured to limit movement of the disc plate relative to the bracket, wherein the clamping plates are disposed at only one side of the first and second friction surfaces in at least one of the plurality of engagement areas.

This floating type disc brake includes the engaging portions of the disc plate engaged with the engaged portions of the bracket, thereby allowing the disc plate to be supported by the bracket in a floating state. Brake torque can be transmitted from the disc plate to the bracket via the engaging portions and the engaged portions, and to the wheel via the axle, thereby braking the wheel.

In the floating type disc brake, the engagement areas where the engaging portions of the disc plate are engaged with the engaged portions of the bracket require a greater area of contact between the engaging portions and the engaged portions to reduce wear on the engagement areas since brake torque is transmitted through them. Meanwhile, the clamping plates provided at the engagement areas are not subjected to particularly great external force although they limit preferably axial movement of the disc plate relative to the bracket.

As a result, the clamping plates are provided at only one side in preferably at least some of a plurality of the engagement areas. In other words, not all the engagement areas have the clamping plates at either side thereof. This reduces the number of components as compared to the conventional arrangement, thereby allowing reduction in weight.

Preferably, the engaging portions are formed at an inner circumferential portion of the annular portion of the disc plate, the bracket is disposed at an inside of the annular portion of the disc plate, and the engaged portions are formed at an outer circumferential portion of the bracket.

Further, preferably the clamping plates are located adjacent to the engagement areas.

Still further, preferably the clamping plates include first clamping plates disposed on the first friction surface and second clamping plates disposed on the second friction surface, and wherein the first clamping plates and the second clamping plates are preferably circumferentially alternately disposed.

Yet further still, preferably the engaging portions of the disc plate are radially inwardly extending projecting portions, and the engaged portions of the bracket are concave portions to be engaged with the projecting portions.

Preferably, the clamping plates are secured to the bracket.

Further, preferably the clamping plates are secured at only one inner circumferential end to an inner circumferential side of the engaged portion of the bracket, and the outer circumferential end of the clamping plates radially extends so as to cover at least one of the engaging portions of the disc plate.

Still further, preferably the bracket includes turn locking portions formed at portions where the clamping plates are mounted, the turn locking portions being close to the sides of an inner circumferential end of the clamping plates.

Yet further still, preferably the turn locking portions, formed at the portions where the clamping plates are mounted on the bracket, include recessed portions which are axially recessed with regard to the wheel axle to which the bracket is mountable so as to house at least part of a thickness of the clamping plates at the inner circumferential end of said clamping plates.

Preferably, screws are screwed into female threads formed in the bracket so as to secure the clamping plates to the bracket.

Further, preferably the screws are flat countersunk head screws having tapered heads, and/or top surfaces of heads of the screws and a surface of the clamping plates are substantially coplanar.

Still further, preferably the bracket is formed in the form of a ring and includes equally-spaced mounting portions circumferentially arranged at an inner circumferential end of the bracket such that the bracket can be secured to the wheel axle of a front wheel or a rear wheel of the motorcycle.

Yet further still, preferably a mounting portion of the bracket is arranged between two vicinal engaged portions of the bracket in circumferential direction thereof.

Preferably, urging components are provided between the clamping plates and the engaging portions of the disc plate and are configured to bring the disc plate in a direction apart from the clamping plates.

There is also provided a motorcycle comprising a body frame, and a front wheel and a rear wheel supported by the body frame, wherein at least one of the front wheel and the rear wheel includes at least one floating type disc brake according to one of the above embodiments.

As described above, the present teaching simplifies the structure of the engagement portions where the disc plate and the bracket of the floating type disc brake are engaged with each other, thereby allowing reduction in weight.

In the following, the present invention is explained in greater detail by means of embodiments thereof in conjunction with the accompanying drawings, wherein:
- Fig. 1: is a side view of a motorcycle according to an embodiment;
- Fig. 2: is a front view of a floating type disc brake;
- Fig. 3: is a front view of a disc plate of the disc brake;
- Fig. 4: is a front view of a bracket of the disc brake;
- Fig. 5: is an enlarged partial view of an engagement portion of a disc plate and a bracket;
- Fig. 6: is a front view and a side view of a clamping plate; and
- Fig. 7: is an enlarged partial view of an engagement portion according to another embodiment.

Among others, the following reference signs are used in the figures:
1: motorcycle
2: body frame
3: drive section
4: seat
5: front wheel
6: rear wheel
7: drive power transmission section
26: floating type disc brake
30: disc plate
31: bracket
32a, 32b, 32c: clamping plate
35: annular portion
35a, 35b: friction surface
37: projecting portion (engaging portion)
40: concave portion (engaged portion)
41a, 41b: recessed portion
42: threaded hole
47: flat countersunk head screw

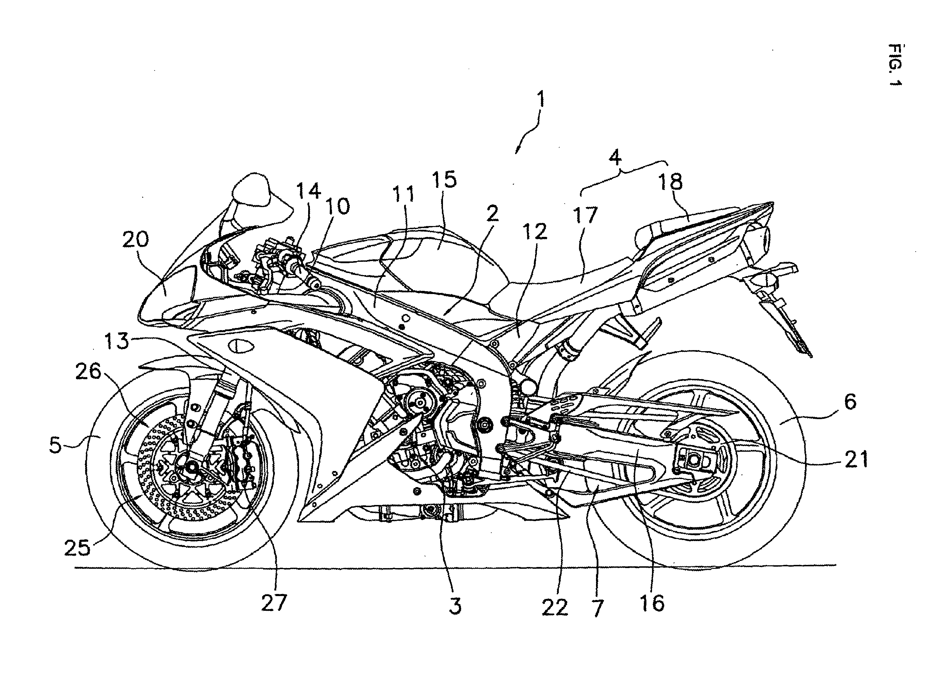

Fig. 1 shows a motorcycle which employs the floating type disc brake according to an embodiment. Fig. 1 is a left side view of the motorcycle.

This motorcycle 1 is a road sport type motorcycle, including a body frame 2, a drive section 3 including an engine, a seat 4, a front wheel 5, a rear wheel 6, and a drive power transmission section 7.

The body frame 2 basically includes a head pipe 10, a pair of left and right tank rails 11 connected to the head pipe 10, and a rear frame 12 connected to the rear end of the tank rails 11 and extending obliquely backward, although the body frame 2 is not described in detail here since the body frame 2 is similar in structure to a well-known motorcycle. The head pipe 10 supports front forks 13. The front forks 13 include handlebars 14 mounted at the upper end thereof and the front wheel 5 supported at the lower end thereof. The tank rails 11 have a fuel tank 15 disposed at the upper portion thereof and the drive section 3 disposed at the lower portion thereof. The tank rails 11 include a rear arm 16 coupled at the lower rear end thereof so as to be vertically swingable, and the rear arm 16 includes the rear wheel 6 supported at the rear end thereof. Furthermore, the rear frame 12 includes a main seat 17 constituting part of the seat 4 disposed at the front thereof and a tandem seat 18 similarly constituting part of the seat 4 disposed at the rear thereof. The body frame 2 is provided with a cowling 20.

The drive power transmission section 7 consists of a drive sprocket (not shown) secured to the output shaft or the output section of the drive section 3, a driven sprocket 21 secured to the axle of the rear wheel 6, and a chain 22 running over and extending between the two sprockets.

The motorcycle 1 includes disc brake devices mounted at either side of the front wheel 5 and a disc brake device mounted at the right side of the rear wheel 6. Fig. 1 shows the disc brake device 25 only mounted at the left side of the front wheel 5. The disc brake device 25 only mounted on the front wheel will be explained below since it is similar in structure to the other disc brake device.

The disc brake device 25 includes a floating type disc brake (hereinafter simply referred to as disc brake) 26 and a hydraulically-operated caliper 27.

The caliper 27 is mounted on the lower portion of the front forks 13 and is similar in structure to conventional ones. That is, it includes a pair of pads disposed so as to be spaced a predetermined distance apart from each other and be opposed to each other, and a piston for moving each of the pair of pads. The piston is adapted to be hydraulically operated in response to a rider's braking operation.

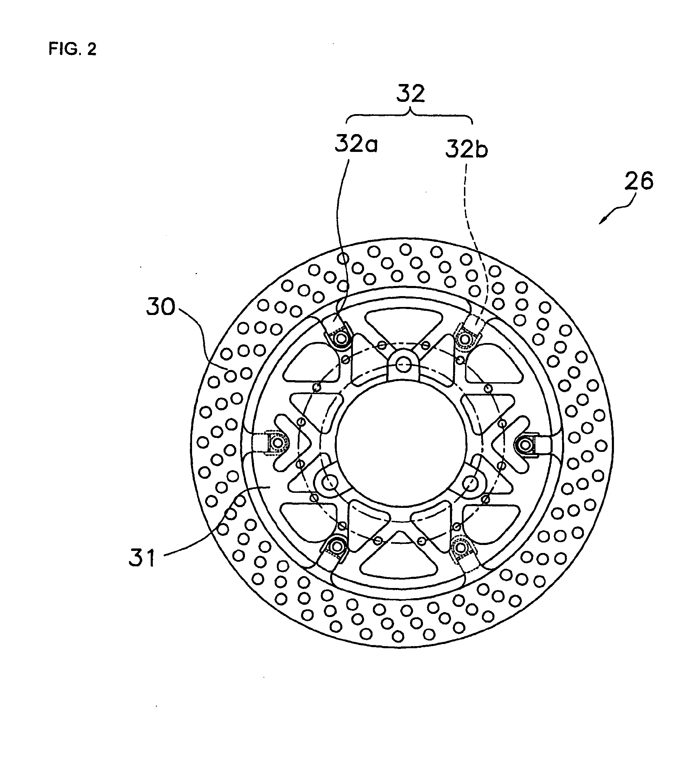

As shown in Fig. 2 and subsequent drawings, the disc brake 26 includes a disc plate 30, whose both sides are adapted to be engaged by the pads of the caliper 27, a bracket 31 mounted on the axle of the front wheel 5, and a plurality of clamping plates 32.

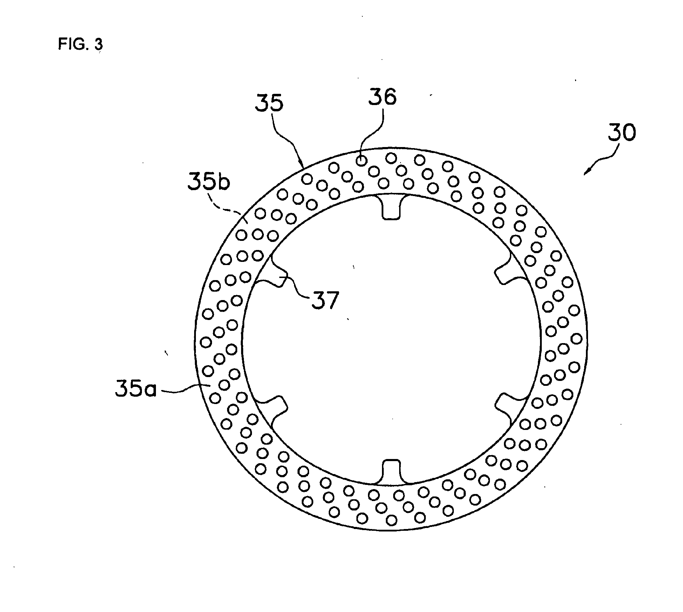

The disc plate 30, made of stainless steel or steel, includes an annular portion 35 formed so as to have an annular shape, and six projecting portions 37 as engaging portions, as shown in Figs. 2 and 3.

The annular portion 35 includes a first friction surface 35a formed at one side thereof and the second friction surface 35b formed at the other side thereof. Fig. 3 shows the only disc plate 30 taken from the device. In response to a rider's braking operation, the friction surfaces 35a, 35b make a sliding engagement with the pads of the caliper 27. The disc plate 30 includes a number of through-holes 36 formed therein for heat dissipation and weight reduction.

The six projecting portions 37 are formed at the inner circumferential portion of the disc plate 30 so as to radially inwardly project. The projecting portions 37 are equally circumferentially spaced so as to radially inwardly extend.

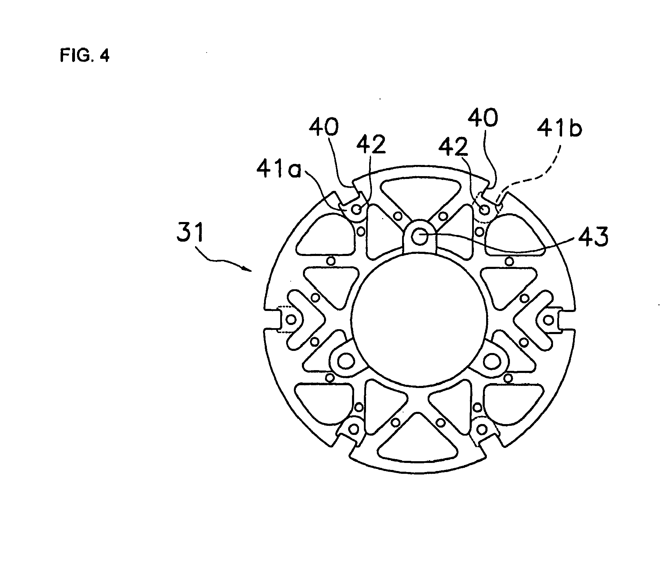

The bracket 31, made of aluminum, is formed so as to have a substantially annular shape, as shown in Figs. 2 and 4. Fig. 4 shows only the bracket 31 taken from the device. As described earlier, the bracket 31 is secured to the axle of the front wheel 5 and is disposed at the inside of the disc plate 30. The bracket 31 has six concave portions (engaged portions) 40 formed at the outer circumferential portion thereof so as to be engageable with the projecting portions 37 of the disc plate 30. The six concave portions 40 are formed so as to radially extend, like the projecting portions 37 of the disc plate 30. Accordingly, projecting portions 37 of the disc plate 30 are engaged in engagement areas with the corresponding concave portions 40 of the bracket 31.

The bracket 31 has six axially-recessed concave portions (hereinafter referred to as recessed portions) 41 a, 41 b formed so as to be further toward the inner circumference than the six concave portions 40. The recessed portions 41 a, 41 b provide a function for locking the clamping plates 32 against turning movement, as detailed later.

The three first recessed portions 41 a of the six recessed portions 41 a, 41 b are formed at the same side as the first friction surface 35a of the disc plate 30, while the remaining three second recessed portions 41 b are formed at the same side as the second friction surface 35b of the disc plate 30. Furthermore, the first and second recessed portions 41 a, 41b are circumferentially alternately arranged. Specifically, the first recessed portions 41 a are circumferentially spaced 120 degrees apart from one another on the first friction surface 35a, while the second recessed portions 41 b are disposed at the circumferential centers of the adjacent recessed portions 41 a on the second friction surface 35b so as to be circumferentially spaced 120 degrees apart from one another.

Since the first and second recessed portions 41 a, 41 b have the same form, only the form of the first recessed portion 41 a will be described below. The first recessed portions 41 a include an end of the inner circumferential side having a semi-circular shape and radially extending with a predetermined width toward the concave portions 40. The first recessed portions 41 a are formed so as to be somewhat wider than the concave portions 40, and their outer circumferential ends extend to the inner circumferential side of the concave portions 40. Furthermore, the first recessed portions 41 a include one threaded hole 42 formed therein.

The bracket 31 includes three holes 43 as mounting portions formed in the inner circumferential portion thereof, the holes being ones through which bolts for securing the bracket 31 to the axle of the front wheel 5 are to be inserted. Each of the three holes 43 is disposed at the circumferential center of the two adjacent concave portions 40. Accordingly, a mounting hole 43 of the bracket 31 is arranged between two vicinal concave portions 40 of the bracket 31 in circumferential direction thereof. In addition, the bracket 31 includes a number of openings formed therein for reduction in weight.

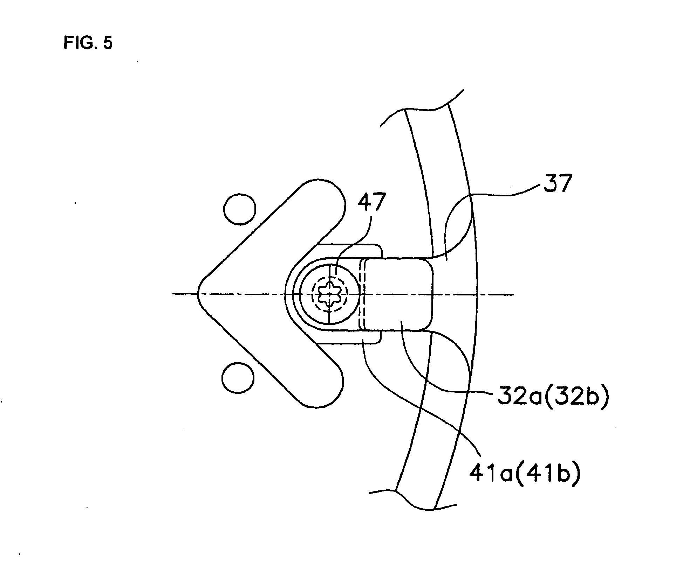

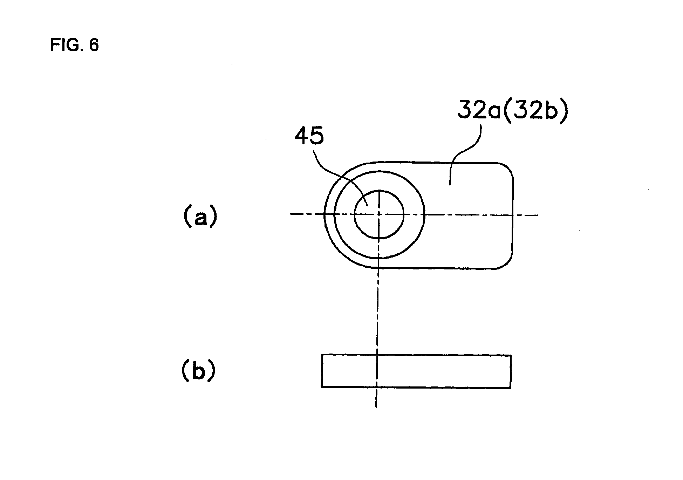

As is obvious from Fig. 5 showing an enlarged view of the engagement portions and Fig. 6 showing the clamping plates themselves, each of the clamping plates 32 is a reed-shaped component having one end of a semi-circular shape. The clamping plates 32 include first clamping plates 32a mounted on the first recessed portions 41 a of the bracket 31, and second clamping plates 32b mounted on the second recessed portions 41 b of the bracket 31. The first clamping plates 32a and the second clamping plates 32b have completely the same configuration, except that they are disposed at different locations. Preferably, the clamping plates 32 are located adjacent to the engagement areas in which the projecting portions 37 and the concave portions 40 are in engagement.

The first and second clamping plates 32a, 32b have a somewhat smaller width than the first and second recessed portions 41 a, 41 b and have nearly the same width as the projecting portions 37 of the disc plate 30. In addition, the first and second clamping plates 32a, 32b include a through-hole 45 formed at one longitudinal end thereof. The through-hole 45 includes a tapered counterbore formed at one side thereof. The tapered counterbore has a counterbore diameter for allowing the head of flat countersunk head screws to be mentioned later to be put into the counterbore.

The first and second clamping plates 32a, 32b are secured to the bracket 31 by the flat countersunk head screws 47 threaded into the threaded hole 42 in the first and second recessed portions 41 a, 41 b of the bracket 31. In addition, when the first and second clamping plates 32a, 32b are secured to the bracket 31, the first and second clamping plates 32a, 32b extend radially so that their radially outer portions cover one side of the projecting portions 37 in the disc plate 30.

As described above, the first clamping plates 32a are secured to the first recessed portions 41 a and the second clamping plates 32b are secured to the second recessed portions 41 b, resulting in the first clamping plates 32a and the second clamping plates 32b being circumferentially alternately arranged. Both of the clamping plates 32a, 32b limit an axial movement of the disc plate 30 relative to the bracket 31.

The axial dimension (thickness) of the disc plate 30 and the bracket 31 and its recessed portions 41 a, 41 b will be described below. The disc plate 30 is sandwiched between the first and second clamping plates 32a, 32b although they are circumferentially alternately arranged. In addition, when both of the clamping plates 32a, 32b are secured to the bracket 31, the disc plate 30 should be arranged so as not to be placed under pressure from the clamping plates 32a, 32b.

The thickness of the bracket 31, the recessed portions 41 a, 41 b, and the thickness of the disc plate 30 have the relationship shown in the following expression, taking the maximum tolerance into consideration.

(Thickness of bracket 31) - (Depth of recessed portion 41a) - (Depth of recessed portions 41b) ≥ (Thickness of disc plate 30)

To assemble the disc brake having the structure mentioned above, the three first clamping plates 32a are secured to one side of the bracket 31. That is, the three first clamping plates 32a are mounted to the corresponding first recessed portions 41 a of the bracket 31 with the flat countersunk head screws 47. Then, the bracket 31 is placed on a work bench or the like with its side having the first clamping plates 32a kept downward, and the disc plate 30 is placed on it. Then, the three first clamping plates 32b are mounted to the corresponding first recessed portions 41 b of the bracket 31 with the flat countersunk head screws 47.

During the assembly above, since each of the first and second clamping plates 32a, 32b is secured to the bracket 31 with only one of the flat countersunk head screws 47, there is a possibility that the first and second clamping plates 32a, 32b may turn together with the flat countersunk head screws 47 when the flat countersunk head screws 47 are tightened.

However, in this embodiment, since the first and second clamping plates 32a, 32b are fitted into the first and second recessed portions 41 a, 41 b, the clamping plates 32a, 32b are brought into contact with the walls of the recessed portions 41 a, 41 b when the flat countersunk head screws 47 are tightened, thereby preventing the flat countersunk head screws 47 from turning together, resulting in improved workability.

The preferred embodiment of the disc brake as described above comprises the following advantages:
(a) The portions where the disc plate 30 is engaged with the bracket 31 have the first clamping plates 32a or the second clamping plates 32b formed at only one side thereof, thereby achieving reduction in weight as compared to conventional devices having clamping plates formed at either side of the engagement portions. Also, reduced number of components facilitates assembling work as well as the management of machining and assembling accuracy.
(b) The first clamping plates 32a and the second clamping plates 32b are circumferentially alternately disposed, thereby avoiding dynamic imbalance during the turning.
(c) The clamping plates 32a, 32b are secured to the bracket 31, namely, not to the disc plate 30, thereby ensuring a greater friction surface on the disc plate 30. This is advantageous in terms of heat generation and wear.
(d) Each of the clamping plates 32a, 32b is secured at only one portion thereof, in contrast to conventional securing at two circumferential portions, thereby reducing clamping plate size and the number of components.
(e) In this embodiment, each of the clamping plates 32a, 32b is secured at one portion thereof to the bracket 31. Therefore, as described above, there is a possibility that the clamping plates 32a, 32b turn together with the flat countersunk head screws 47 when the flat countersunk head screws 47 are tightened. However, since clamping plates 32 are fitted into the recessed portions 41 a, 41 b, the recessed portions 41 a, 41 b provide a function for locking against turning movement. Accordingly, this eliminates the necessity of a special jig for assembling when the clamping plates 32a, 32b are secured with the flat countersunk head screws 47.
(f) The clamping plates 32a, 32b are secured with the flat countersunk head screws 47, thereby attaining reduction in weight as compared to conventional crimping. Also, the use of the flat countersunk head screws 47 allows the head surface of the screws to be substantially flush with the surface of the clamping plates 32a, 32b. This eliminates the necessity of making an arrangement to avoid the interference between the flat countersunk head screws 47 and other components, resulting in enhanced flexibility in design.

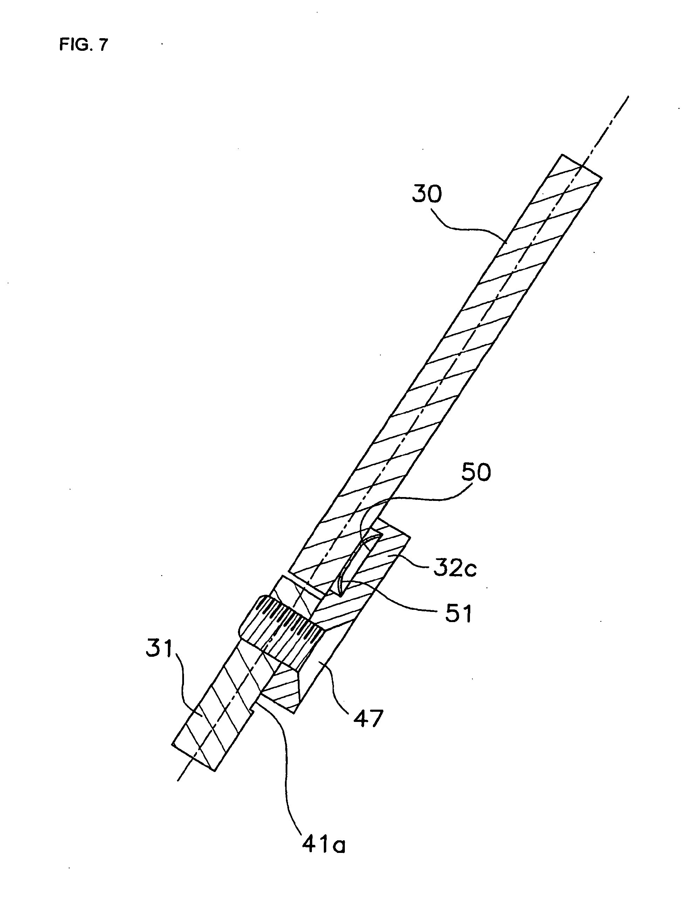

Fig. 7 shows another embodiment. This embodiment is equal in structure to the aforementioned embodiment except the shape of the first clamping plates and the addition of a blade spring.

The first clamping plates 32c according to the embodiment as shown in Fig. 7 include a concave portion 50 formed at the back side (side opposed to the disc plate 30) thereof. The concave portions 50 include a blade spring 51 as urging component disposed thereinside so as to urge the disc plate 30 in the direction away from the first clamping plates 32c. The blade spring 51 is provided only at the first clamping plates 32 mounted on one side.

In this case, the blade spring 51 normally urges the disc plate 30 in one direction, thereby suppressing an axial deflection of the disc plate 30.

In the aforementioned embodiments, six clamping plates at six engagement portions, three first clamping plates 32a at one side and three second clamping plates 32b at the other side, are provided. However, no restrictions are placed on the number of engagement portions, the number of clamping plates, and their disposition. For example, eight engagement portions may be provided, and three clamping plates may be provided for each side. In this case, two engagement portions are provided with no clamping plate. However, since three clamping plates for each side, six clamping plates in total, limit an axial movement of the disc plate, no problem is experienced.

Although the disc plate 30 includes the projecting portions 37, while the bracket 31 includes the concave portions 40 in the aforementioned embodiment, they may be reversed. However, as described above, since the disc plate 30 is made of stainless steel or steel, and the bracket 31 is made of aluminum, it is desirable that the disc plate 30 have projecting portions therein, from the viewpoint of strength.

Although one of the clamping plates is secured with one of the flat countersunk head screws in the aforementioned embodiment, one of the clamping plates may be secured with two screws or by crimping, as is conventionally done. This results in an increase in weight as compared to the aforementioned embodiment, but results in a reduction in weight as compared to the case where clamping plates are provided at both sides, as is conventionally done.

Screws for securing are not limited to flat countersunk head screws. The use of screws with lower-height heads provides substantially similar effects.

Although the first and second recessed portions 41 a, 41 b are formed as a means for locking the clamping plates 32a, 32b against turning movement in the aforementioned embodiment, the structure for locking against turning movement is not limited to the recessed portions. For example, projections may be provided at either side of the clamping plates 32a, 32b so as to come very close to such clamping plates.

The description above discloses (among others), an embodiment of a floating type disc brake to be mounted on a wheel axle of a motorcycle, comprising: a disc plate including an annular portion having a first friction surface and a second friction surface for braking formed at either side thereof and a plurality of engaging portions formed at the inner circumferential portion of the annular portion; a bracket, mounted on the wheel axle and disposed at the inside of the annular portion of the disc plate, including a plurality of engaged portions formed at the outer circumferential portion thereof, the engaging portions being engaged with the corresponding engaged portions; and clamping plates, provided at a plurality of engagement portions where a plurality of the engaging portions and the engaged portions are engaged, which are a component for limiting an axial movement of the disc plate relative to the bracket and are disposed at only one side of the first and second friction surfaces in at least some of a plurality of the engagement portions.

Preferably, the clamping plates include first clamping plates disposed on the first friction surface and second clamping plates disposed on the second friction surface, and wherein the first clamping plates and the second clamping plates are circumferentially alternately disposed.

Further, preferably the engaging portions on the disc plate are radially inwardly extending projecting portions; and the engaged portions on the bracket are concave portions to be engaged with the projecting portions.

Further, preferably the first clamping plates and the second clamping plates are secured to the bracket.

Further, preferably the clamping plates are secured at only one inner circumferential end to the inner circumferential side of the engaged portion of the bracket, and the outer circumferential end radially extends so as to cover at least some of the engaging portions of the disc plate.

Further, preferably the bracket includes turn locking portions formed at portions where the clamping plates are mounted, the turn locking portions being very close to the sides of the inner circumferential end of the clamping plates.

Further, preferably the turn locking portions, formed at the portions where the clamping plates are mounted on the bracket, include a recessed portion which is axially recessed so as to house at least part of the thickness thereof at the inner circumferential end of the clamping plates.

Further, preferably screws are threaded into female threads formed in the bracket at the portions where the clamping plates are secured, the screws allowing the first clamping plates and the second clamping plates to be secured to the bracket.

Further, preferably the screws are flat countersunk head screws having tapered heads; and the top surface of the head of the screws and the surface of the clamping plates are substantially coplanar.

Further, preferably the bracket is formed in the form of a ring and includes three equally-spaced mounting portions circumferentially arranged at the inner circumferential end thereof for allowing the bracket to be secured to the wheel axle of the front wheel; and two of a plurality of the engaged portions are circumferentially arranged between two of the three mounting portions in the bracket.

Further, preferably urging components are provided between the clamping plates and the engaging portions in the disc plate and urges the disc plate in the direction apart from the clamping plates.

The description above also discloses an embodiment of a motorcycle, comprising: a body frame; a drive section including an engine supported by the body frame; a seat disposed above the drive section; a front wheel and a rear wheel supported by the body frame; and a drive power transmission section for transmitting power from the drive section to the front wheel or the rear wheel, wherein at least one of the front wheel and the rear wheel includes a floating type disc brake to be mounted to a wheel axle; and wherein the floating type disc brake comprises: a disc plate including an annular portion having a first friction surface and a second friction surface formed at either side thereof and a plurality of engaging portions formed at the inner circumferential portion of the annular portion; a bracket, mounted on the axle of the front wheel and disposed at the inside of the annular portion of the disc plate, including a plurality of engaged portions formed at the outer circumferential portion thereof, the engaging portions being engaged with the corresponding engaged portions; and clamping plates, provided at a plurality of engagement portions where a plurality of the engaging portions and the engaged portions are engaged, which are a component for limiting an axial movement of the disc plate relative to the bracket and are disposed at only one side of the first and second friction surfaces in at least some of a plurality of the engagement portions.

In order to provide a reduction in weight for a floating type disc brake device, an embodiment of a floating type disc brake includes a disc plate 30, a bracket 31 and clamping plates 32. The disc plate 30 includes an annular portion 35 having friction surfaces 35a, 35b for braking formed at either side thereof and a plurality of engaging portions 37 formed at the inner circumferential portion of the annular portion 35. The bracket 31, disposed on the inside of the annular portion 35 of the disc plate 30, includes a plurality of concave portions 40 formed at the outer circumferential portion thereof, the projecting portions 37 being engaged with the corresponding concave portions 40. The clamping plates 32, disposed at a plurality of engagement portions where a plurality of the projecting portions 37 are engaged with a plurality of the concave portions 40, is a component designed to limit an axial movement of the disc plate 30 relative to the bracket 31. Furthermore, the clamping plates 32 are disposed at only one side in at least some of a plurality of the engagement portions.

## Claims

1. Floating type disc brake for a wheel axle of a motorcycle (1), comprising:
a disc plate (30) including an annular portion (35) having a first friction surface (35a) and a second friction surface (35b) formed for braking at either side of the disc plate (30) and a plurality of engaging portions (37);
a bracket (31) mountable on the wheel axle and including a plurality of engaged portions (40), the engaging portions (37) of the disc plate (30) being engaged in engagement areas with the corresponding engaged portions (40) of the bracket (31); and
clamping plates (32) configured to limit movement of the disc plate (30) relative to the bracket (31), wherein the clamping plates (32) are disposed at only one side of the first and second friction surfaces (35a,35b) in at least one of the plurality of engagement areas.

2. Floating type disc brake according to claim 1, wherein the engaging portions (37) are formed at an inner circumferential portion of the annular portion (35) of the disc plate (30), the bracket (31) is disposed at an inside of the annular portion (35) of the disc plate (30), and the engaged portions (40) are formed at an outer circumferential portion of the bracket (31).

3. Floating type disc brake according to claim 1 or 2, wherein the clamping plates (32) are located adjacent to the engagement areas.

4. Floating type disc brake according to one of claims 1 to 3, wherein the clamping plates (32) include first clamping plates (32a,32c) disposed on the first friction surface (35a) and second clamping plates (32b) disposed on the second friction surface (35b), and wherein the first clamping plates (32a,32c) and the second clamping plates (32b) are preferably circumferentially alternately disposed.

5. Floating type disc brake according to one of claims 1 to 4, wherein the engaging portions (37) of the disc plate (30) are radially inwardly extending projecting portions, and the engaged portions (40) of the bracket (31) are concave portions to be engaged with the projecting portions.

6. Floating type disc brake according to one of claims 1 to 5, wherein the clamping plates (32) are secured to the bracket (31).

7. Floating type disc brake according to claim 6, wherein the clamping plates (32) are secured at only one inner circumferential end to an inner circumferential side of the engaged portion (40) of the bracket (31), and the outer circumferential end of the clamping plates (32) radially extends so as to cover at least one of the engaging portions (37) of the disc plate (30).

8. Floating type disc brake according to one of claims 1 to 7, wherein the bracket (31) includes turn locking portions formed at portions where the clamping plates (32) are mounted, the turn locking portions being close to the sides of an inner circumferential end of the clamping plates (32).

9. Floating type disc brake according to claim 8, wherein the turn locking portions, formed at the portions where the clamping plates (32) are mounted on the bracket (31), include recessed portions (41 a,41 b) which are axially recessed with regard to the wheel axle to which the bracket (31) is mountable so as to house at least part of a thickness of the clamping plates (32) at the inner circumferential end of said clamping plates (32).

10. Floating type disc brake according to one of claims 6 to 9, wherein screws are screwed into female threads formed in the bracket (31) so as to secure the clamping plates (32) to the bracket (31).

11. Floating type disc brake according to claim 9, wherein the screws are flat countersunk head screws (47) having tapered heads, and/or top surfaces of heads of the screws and a surface of the clamping plates (32) are substantially coplanar.

12. Floating type disc brake according to one of claims 1 to 11, wherein the bracket (31) is formed in the form of a ring and includes equally-spaced mounting portions (43) circumferentially arranged at an inner circumferential end of the bracket (31) such that the bracket (31) can be secured to the wheel axle of a front wheel (5) or a rear wheel (6) of the motorcycle.

13. Floating type disc brake according to claim 12, wherein a mounting portion (43) of the bracket (31) is arranged between two vicinal engaged portions (40) of the bracket (31) in circumferential direction thereof.

14. Floating type disc brake according to one of claims 1 to 13, wherein urging components (51) are provided between the clamping plates (32c) and the engaging portions (37) of the disc plate (30) and are configured to bring the disc plate (30) in a direction apart from the clamping plates (32c).

15. Motorcycle comprising a body frame (2), and a front wheel (5) and a rear wheel (6) supported by the body frame (2), wherein at least one of the front wheel (5) and the rear wheel (6) includes at least one floating type disc brake (26) according to one of claims 1 to 14.
